# EUROPEAN PATENT APPLICATION

(11) **EP 4 112 668 A1**
(43) Date of publication of application: **04.01.2023**
(21) Application number: 21182022.0
(22) Date of filing: 28.06.2021
(51) Int. Cl.: C08G 18/12, C08G 18/42, C08G 18/48, C08G 18/76, C08L 23/10, C09J 175/04

(54) **REACTIVE HOT-MELT ADHESIVE HAVING GOOD ADHESION TO BOTH POLAR AND NON-POLAR SUBSTRATES**

(71) Applicant: Sika Technology AG, 6340 Baar (CH)
(72) Inventor: Schmider, Martin, 21335 Lüneburg (DE)
(74) Representative: Sika Patent Attorneys

(57) **Abstract**

The invention relates to a hot-melt adhesive composition comprising a nonreactive part based on non-functionalized poly a-olefins and a reactive part based on polyurethane pre-polymers. The hot-melt adhesive composition provides good adhesion on both polar and non-polar substrates. The invention is also related to a method for producing the adhesive composition, to the use of the adhesive composition as an assembly adhesive, laminating adhesive, or as adhesive for building of sandwich elements, and to a method for bonding substrates to each other.

## Description

### Technical field

The invention relates to reactive hot-melt adhesives having good bonding on both polar and non-polar substrates and to use of adhesives as an assembly adhesive, a laminating adhesive, or as an adhesive for the building of sandwich elements, particularly in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the adhesive composition to water. Moisture curing hot-melt adhesives typically contain polymers functionalized with isocyanate or silane groups, which enable the crosslinking of the polymer chains upon contact with water, particularly with atmospheric moisture.

Typical reactive hot-melt adhesives used in the automotive industry as assembly adhesives include moisture curing polyurethane- and polyolefin-based hot melt adhesives. Moisture curing polyurethane hot-melt (PUR-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. State-of-the-Art PUR-RHM adhesives typically have the disadvantage of having a poor adhesion on non-polar substrates such as polypropylene, polyethylene, and polystyrene. In case these adhesives are used for bonding of non-polar substrates these have to be treated with a primer, which significantly increases the application costs.

Reactive and non-reactive polyolefin hot-melt adhesives, particularly the ones based on amorphous poly-α-olefins (APAO), have highly non-polar properties and are, therefore, in principle suitable for bonding of non-polar substrates without pre-treatment with primer compositions. Reactive polyolefin hot-melt adhesives (PO-RHM), such as moisture curing polyolefin hot-melt adhesives typically consist mainly of poly-α-olefins, which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction. State-of-the-Art reactive and non-reactive polyolefin hot-melt adhesives typically have the disadvantage of having a relatively poor adhesion on polar substrates, such as PMMA, PA, PC, and ABS.

There is thus a need for a novel type of reactive hot-melt adhesive, which provides good bonding on both polar and non-polar substrates, which have not been pre-treated with primer compositions.

### Summary of the invention

The object of the present invention is to provide a moisture curing adhesive composition, which overcomes or at least mitigates the disadvantages of the prior art moisture curing hot-melt adhesives as discussed above.

Particularly, it is an object of the present invention to provide a moisture curing adhesive composition, which provides good bonding on both polar and non-polar substrates without the use of primer compositions.

Another objective of the present invention is to provide a moisture curing adhesive composition, which can be produced with lower production costs than State-of-the-Art moisture curing polyurethane based hot-melt adhesives.

The subject of the present invention is an adhesive composition as defined in claim 1.

It was surprisingly found out that a novel type of reactive hot-melt adhesive composition comprising a mixture of a non-reactive polyolefin polymer and a polyurethane pre-polymer obtained from reactions with at least one cashew nutshell liquid based polyol provides sufficient bonding on both non-polar and polar adhesives. Furthermore, it was surprisingly found out that substantial amounts of the non-reactive polyolefin polymer can be admixed with the polyurethane pre-polymer without having a negative impact on application related properties such as open time and green strength of the hot-melt adhesive composition.

Other subjects of the present invention are presented in other independent claims. Preferred aspects of the invention are presented in the dependent claims.

### Detailed description of the invention

The subject of the present invention is an adhesive composition comprising:
a) 0.1 - 25 wt.-%, preferably 0.5 - 20 wt.-%, of at least one non-functionalized poly-α-olefin **P** and
b) At least 65 wt.-%, preferably at least 75 wt.-%, of a reaction product **RP,** all proportions being based on the total weight of the adhesive composition,
wherein the reaction product **RP** is obtained by reacting at least one first polyol **P01,** at least one second polyol **PO2,** and at least one polyisocyanate **PI** or
by reacting at least one second polyol **PO2** with a first polyurethane prepolymer **PUP1** at a molar ratio of isocyanate groups to hydroxyl groups of at least 3 or
by reacting at least one first polyol **PO1** with a second polyurethane prepolymer **PUP2** at a molar ratio of isocyanate groups to hydroxyl groups of at least 3, wherein the second polyurethane pre-polymer **PUP2** has been obtained by reacting at least one second polyol **PO2** with at least one polyisocyanate **PI,**
wherein the at least one second polyol **PO2** is a cashew nutshell liquid based polyol.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "a-olefin" designates an alkene having the molecular formula CₓH₂ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure.

The term "monomer" designates a molecule having at least one polymerizable group. A monomeric di- or polyisocyanate contains particularly no urethane groups. Oligomers or polymer products of diisocyanate monomers such as adducts of monomeric diisocyanates are not monomeric diisocyanates. The monomeric di- or polyisocyanate preferably has an average molecular weight of not more than 1000 g/mol, more preferably not more than 500 g/mol, even more preferably not more than 400 g/mol.

The term "prepolymer" designates a polymer, which contains at least one, usually two or more, reactive group(s), for example isocyanate groups. By way of the reactive groups, the prepolymer may be chain-extended, crosslinked or coupled.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride group on the polymer backbone.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "polyurethane pre-polymer" designates polyurethane polymers comprising one or more unreacted isocyanate groups. The polyurethane prepolymers can be obtained by reacting excess of polyisocyanates with polyols and they are polyisocyanates themselves. The terms "isocyanate-functional polyurethane polymer" and "polyurethane pre-polymer" can be used interchangeably.

The term "molecular weight" refers to the molar mass (g/mol) of a molecule or a part of a molecule, also referred to as "moiety". The term "average molecular weight" can refer to weight or number average molecular weight (Mₙ, M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and, depending on the molecule, tetrahydrofurane as a solvent, at 35 °C, or 1,2,4-trichlorobenzene as a solvent, at 160 °C.

The term "average OH-functionality" designates the average number of hydroxyl (OH) groups per molecule. The average OH-functionality of a compound can be calculated based on the number average molecular weight (Mₙ) and the hydroxyl number of the compound. The hydroxyl number of a compound can be determined by using method as defined in DIN 53 240-2 standard.

The term "softening point" or "softening temperature" designates a temperature at which compound softens in a rubber-like state, or a temperature at which the crystalline portion within the compound melts. The softening point can be measured by a Ring and Ball method according to DIN EN 1238 standard. The term "open time" designates the length of a time period during which an adhesive applied to a surface of a substrate is still able to form an adhesive bond after being contacted with another substrate.

The "amount or content of at least one component X" in a composition, for example "the amount of the at least one polyisocyanate PI" refers to the sum of the individual amounts of all polyisocyanates PI contained in the composition. Furthermore, in case the composition comprises 20 wt.-% of at least one polyisocyanate PI, the sum of the amounts of all polyisocyanates PI contained in the composition equals 20 wt.-%.

The term "room temperature" refers to a temperature of ca. 23 °C.

The adhesive composition of the present invention comprises as a first compulsory constituent at least one non-functionalized poly-α-olefin **P.** The term "non-functionalized poly-α-olefin" designates in the present disclosure poly-α-olefins, which do not contain functional groups such as epoxy-, silane-, sulfonate-, amide-, or anhydride- groups on the polymer backbone. The adhesive composition can be characterized as a "hybrid hot-melt adhesive" comprising a non-reactive part based on non-functionalized poly-α-olefins and a reactive part based on moisture curing polyurethane pre-polymers. Due to the presence of the non-reactive polyolefin-based part, the adhesive composition provides good adhesion to non-polar substrates whereas the reactive part based on polyurethane pre-polymers provides good adhesion to polar substrates.

According to one or more embodiments, the at least one non-functionalized poly-α-olefin **P** comprises 1.5 - 20 wt.-%, preferably 2.5 - 15 wt.-%, more preferably 3.5 - 12.5 wt.-%, even more preferably 3.5 - 10 wt.-%, of the total weight of the adhesive composition. Adhesive compositions containing the at least one non-functionalized poly-α-olefin **P** in an amount falling within the above cited ranges have been found out to exhibit especially good bonding to both non-polar substrates, such as polycarbonate substrates, as well as to polar substrates, such as metal substrates.

The at least one non-functionalized poly-α-olefin **P** is preferably a at 25 °C solid non-functionalized poly-α-olefin. Suitable at 25 °C solid poly-α-olefins include, for example, homopolymers, copolymers, and terpolymers of monomers selected from the group consisting of ethylene, propylene, 1-butene and higher α-olefins.

According to one or more embodiments, the at least one non-functionalized poly-α-olefin **P** has
- a number average molecular weight (Mₙ) in the range of 1500 - 100000 g/mol, preferably 1500 - 50000 g/mol, more preferably 3000 - 25000 g/mol.
- a softening point measured by Ring and Ball method according to DIN EN 1238 standard in the range of 60 - 200 °C, preferably 60 - 180 °C, more preferably 80 - 160 °C, even more preferably 85 - 150 °C and/or

According to one or more embodiments, the at least one non-functionalized poly-α-olefin **P** is a at 25 °C solid non-functionalized atactic poly-α-olefin, preferably a at 25 °C solid non-functionalized amorphous poly-α-olefin (APAO). The term "amorphous" refers in the present disclosure to polymers having a very low crystallinity degree determined by differential scanning calorimetry (DSC) measurements, preferably lacking a crystalline melting point (Tₘ) as determined by DSC measurements.

According to one or more embodiments, the at least one non-functionalized poly-α-olefin **P** is a at 25 °C solid non-functionalized amorphous poly-α-olefin having a heat of fusion (Hf) as determined by DSC measurements of not more than 35 J/g, preferably not more than 30 J/g, more preferably not more than 25 J/g.

Examples of suitable at 25 °C solid amorphous non-functionalized poly-α-olefins include amorphous atactic polypropylene, amorphous propylene-ethylene copolymer, amorphous propylene-butene copolymer, amorphous propylene-hexene copolymer, and amorphous propylene-ethylene-butene terpolymer. Amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

According to one or more embodiments, the at least one non-functionalized poly-α-olefin **P** is a at 25 °C solid non-functionalized amorphous poly-α-olefin having
- a number average molecular weight (Mₙ) in the range of 1500 - 50000 g/mol, preferably 3000 - 25000 g/mol and/or
- a softening point measured by Ring and Ball method according to DIN EN 1238 in the range of 60 - 180 °C, preferably 70 - 160 °C, more preferably 80 - 140 °C and/or
- a melt viscosity measured according to DIN 53019 standard at 190 °C using a rotational viscometer of not more than 150000 MPa·s, preferably not more than 125000 MPa·s, particularly in the range of 1000 - 100000 MPa·s, preferably 2500 - 75000 MPa·s and/or
- a heat of fusion (Hf) as determined by DSC measurements of not more than 35 J/g, preferably not more than 30 J/g, more preferably not more than 25 J/g and/or
- a xylene cold soluble content (XCS) determined at 25 °C according ISO 16152-2005 standard of at least 80 wt.-%, preferably at least 90 wt.-%, more preferably at least 95 wt.-%. The melt viscosity of the at least one non-functionalized amorphous poly-α-olefin is preferably determined according to DIN 53019 standard by busing a rotational viscometer at 5 revolutions per minute using a Brookfield DV-2 Thermosel viscometer with a spindle No. 27.

Suitable at 25 °C solid non-functionalized amorphous poly-α-olefins are commercially available, for example, from Evonik Industries under the trade name of Vestoplast^{®}, from Eastman Corporation under the trade name of Eastoflex^{®}, and from REXtac LLC under the trade name of REXtac^{®}.

The adhesive composition comprises as a second compulsory constituent a reaction product **RP** obtained by reacting at least one first polyol **P01,** at least one second polyol **PO2,** and at least one polyisocyanate **PI** or by reacting the at least one second polyol **PO2** with a first polyurethane pre-polymer **PUP1** or by reacting at least one first polyol **P01** with a second polyurethane prepolymer **PUP2** obtained by reacting the at least one second polyol **PO2** with the at least one polyisocyanate **PI,** wherein the at least one second polyol **PO2** is a cashew nutshell liquid based polyol.

The term "cashew nut shell liquid (CNSL)" refers to a liquid extracted from a cashew nutshell whereas the term "cashew nutshell liquid based polyol" refers to polyols derived from cashew nut shell liquid. Suitable cashew nutshell liquid based polyols are commercially available, for example, under the trade name of Cardolite@ (from Cardolite Corporation).

The reaction product **RP** comprises all reaction products that are produced in the reactions between isocyanate group containing compounds and hydroxyl-group containing compounds, including primarily polyurethane pre-polymers and any unconverted polyisocyanates. For example, if a starting mixture containing the reactants needed to obtain the reaction product **RP** comprises additional non-reactive compounds, such as waxes, non-functionalized resins, or other additives, these are not considered to form a part of the reaction product **RP.**

According to one or more embodiments, the reaction product **RP** comprises 65 - 97.5 wt.-%, preferably 70 - 95 wt.-%, more preferably 75 - 90 wt.-%, even more preferably 80 - 90 wt.-%, of the total weight of the adhesive composition. It has been surprisingly found out that polyurethane pre-polymers obtained by using one or more cashew nutshell liquid based polyols as the at least one second polyol **PO2** have particularly good compatibility with non-functionalized poly-α-olefins, particularly with at 25 °C solid non-functionalized amorphous poly-α-olefins. The improved compatibility between polyurethane pre-polymers and non-functionalized poly-α-olefins enables formulation of hybrid moisture curing adhesives exhibiting good bonding to both non-polar and polar substrates. Without being bound to any theory it is believed that the aliphatic chain part of the cashew nutshell liquid based polyols acts as a compatibilizer between the polyurethane pre-polymer, i.e. the reaction product **RP,** and the at least one non-functionalized poly-α-olefin **P.**

According to one or more embodiments, the at least one second polyol **PO2** has a viscosity at 25 °C determined according to ASTM D2196 standard in the range of 500 - 10000 MPa·s, preferably 1000 - 5000 MPa·s and/or hydroxyl value determined according of ASTM D1957 standard in the range of 25 - 200 mg KOH/g, preferably 50 - 150 mg KOH/g.

Preferably, the at least one second polyol **PO2** is a cashew nutshell liquid based diol, more preferably a cashew nutshell liquid based polyester diol or a cashew nutshell liquid based polyether diol.

According to one or more embodiments, the first polyurethane pre-polymer **PUP1** and/or and the second polyurethane pre-polymer **PUP2** has an average isocyanate-functionality determined according to ISO 14896-2009 standard method A in the range of 1.2 - 2.7, preferably 1.5 - 2.5 and/or an isocyanate content determined by using the method as defined in ISO 11909 standard in the range of 0.5 - 25 wt.-%, preferably 2.5 - 20 wt.-%.

The adhesive composition of the present invention preferably exhibits a low level of residual polyisocyanates, particularly monomeric diisocyanates. The term "monomeric diisocyanate" refers in the present disclosure to an organic compound with two isocyanate groups that are separated by a divalent hydrocarbon radical, preferably having an average molecular weight of not more than 1000 g/mol, more preferably not more than 500 g/mol, even more preferably not more than 400 g/mol.

According to one or more embodiments, the adhesive composition has a content of monomeric diisocyanates of less than 0.75 wt.-%, preferably less than 0.5 wt.-%, more preferably less than 0.35 wt.-%, even more preferably less than 0.25 wt.-%, still more preferably less than 0.1 wt.-%, based on the total weight of the adhesive composition. Polyurethane based adhesive compositions having content of monomeric diisocyanates of less than 0.1 wt.-% are safe to use even without special protective measures and can therefore be sold in many countries without being labeled as harmful (Xn).

Content of monomeric diisocyanates in a polyurethane based adhesive composition can be reduced, for example, by using polyurethane pre-polymers having a low content of diisocyanate monomers, also known as "low monomer polyurethane pre-polymers".

Low monomer polyurethane pre-polymers can be obtained, for example, from the reaction of monomeric diisocyanates with polyols at a high stoichiometric excess of monomeric diisocyanates followed by subsequent removal of most of the monomeric diisocyanates by means of a suitable separation process, such as distillation, for example, thin film distillation or molecular distillation. Suitable low monomer polyurethane pre-polymers and methods for their preparation are disclosed in a published patent application WO 2020/030607 A1, on pages 7-14.

According to one or more embodiments, the first polyurethane pre-polymer **PUP1** and/or the second polyurethane pre-polymer **PUP2** is a low monomer polyurethane pre-polymer having a content of monomeric diisocyanates of not more than 1.0 wt.-%, preferably not more than 0.75 wt, more preferably not more than 0.5 wt.-%, even more preferably 0.25 wt.-%, still more preferably not more than 0.15 wt.-%, most preferably not more than 0.1 wt,.%, based on the weight of the polyurethane pre-polymer.

According to one or more preferred embodiments, the reaction product RP is obtained by reacting the at least one second polyol **PO2** with the first polyurethane pre-polymer **PUP1** at a molar ratio of isocyanate groups to hydroxyl groups of at least 3, preferably in the range of from 3 to 10, preferably from 3.5 to 7.5. The expression "molar ratio of isocyanate groups to hydroxyl groups" designates in the present disclosure the molar ratio of isocyanate groups of isocyanate-group containing compounds to the hydroxyl groups of hydroxyl-group containing compounds in the respective mixture.

According to one or more embodiments, the at least one second polyol **PO2** comprises 1 - 35 wt.-%, preferably 2.5 - 25 wt.-%, more preferably 3.5 - 15 wt.-%, based on the sum of the weights of the at least one second polyol **PO2** and the first polyurethane pre-polymer **PUP1** and/or the first polyurethane prepolymer **PUP1** comprises 65 - 99 wt.-%, preferably 75 - 97.5 wt.-%, more preferably 85 - 96.5 wt.-%, based on the sum of the weights of the at least one second polyol **PO2** and the first polyurethane pre-polymer **PUP1.**

The reaction between the at least one second polyol **PO2** and the first polyurethane pre-polymer **PUP1** can be carried out in a conventional manner. This means particularly that the hydroxyl groups of the at least one second polyol **PO2** react with the isocyanate groups of the first polyurethane prepolymer **PUP1**. Preferably, the reaction between the at least one second polyol **PO2** and the first polyurethane pre-polymer **PUP1** will convert substantially all the hydroxyl groups of the at least one second polyol **PO2,** for example at least 95 %, generally at least 99 %, of the hydroxyl groups of the at least one second polyol **PO2.**

The reaction between the at least one second polyol **PO2** and the first polyurethane pre-polymer **PUP1** may, for example, be carried out at temperatures in the range of 60 - 160 °C, preferably 80 - 140 °C, optionally in the presence of a catalyst. The reaction time, as will be appreciated, depends on the temperature employed, but may, for example, be in the range of from 30 minutes to 6 hours, preferably from 30 minutes to 3 hours, more preferably from 30 minutes to 1.5 hours.

According to one or more further embodiments, the reaction product **RP** has been obtained by using a method comprising steps of:
i) reacting the at least one first polyol **P01** with the at least one polyisocyanate **PI** to obtain a reaction mixture comprising a polyurethane pre-polymer and unconverted polyisocyanate **PI,**
ii) optionally reducing the monomeric diisocyanate content of the reaction mixture obtained from step i), preferably by distillation,
iii) adding to the reaction mixture obtained from step i) or ii) the at least one second polyol **PO2** and carrying out the reaction.

Preferably, the molar ratio of isocyanate groups to hydroxyl groups in step i) is in the range from 1.5 to 2.5, preferably from 1.7 to 2.2 and/or the molar ratio of isocyanate groups to hydroxyl groups in step iii) is in the range from 3 to 10, preferably from 3.5 to 7.5. In case the reactions in steps i) and iii) are carried out in the presence of further reactive compounds containing isocyanate groups or hydroxyl groups, these are also considered in calculating the respective molar ratios of isocyanate groups to hydroxyl groups.

According to one or more embodiments, the at least one first polyol **P01** comprises 50 - 97.5 wt.-%, preferably 65 - 95 wt.-%, of the total weight of the composition, which is reacted in step i) of the method and/or the at least one polyisocyanate **PI** comprises 2.5 - 50 wt.-%, preferably 5 - 35 wt.-% of the total weight of the composition, which is reacted in step i) of the method.

The reaction of the at least one first polyol **P01** and the at least one polyisocyanate **PI** in step i) may be carried out according conventional methods used for preparation of polyurethane pre-polymers. The reaction in step i) may, for example, be carried out at temperatures in the range of 50 - 160 °C, preferably 60 - 120 °C, optionally in the presence of a catalyst. The reaction time depends on the temperature employed, but may, for example, be in the range of from 30 minutes to 6 hours, particularly from 30 minutes to 3 hours, preferably from 30 minutes to 1.5 hours. Suitable catalysts used in step i) include, for example, metal catalysts, such as Coscat^{®}83 (from Vertellus Performance Materials Inc.), and tin catalysts.

Since the reaction of the at least one first polyol **P01** with the at least one polyisocyanate **PI** in step i) is conducted in a stoichiometric excess of the polyisocyanate **PI,** the reaction mixture obtained from step i) contains at least some unconverted polyisocyanate **PI.** According to one or more embodiments, the amount of unconverted polyisocyanate **PI** in the reaction mixture obtained from step i) is 1.5 - 5 wt.-%, preferably 2 - 4 wt.-%, based on the total weight of the reaction mixture. The amount of unconverted polyisocyanates present in a reaction mixture can be determined using high pressure liquid chromatography (HPLC).

Preferably, the polyurethane pre-polymer contained in the reaction mixture obtained from step i) has an average isocyanate functionality determined according to ISO 14896-2009 standard method A of not more than 3.5, more preferably not more than 3. According to one or more embodiments, the polyurethane pre-polymer contained in the reaction mixture obtained from step i) has an average isocyanate functionality determined according to ISO 14896-2009 standard method A in the range of 1.2 - 2.7, preferably 1.5 - 2.5. The term "average NCO-functionality" designates in the present disclosure the average number of isocyanate (NCO) groups per molecule.

The reaction mixture obtained from step i) can be used as such for further reacting in step iii), i.e. without any additional workup steps. However, it may be preferable to separate at least a portion of the unconverted polyisocyanate **PI** before the reaction mixture is reacted with the at least one second polyol **PO2** in step iii) of the method.

According to one or more embodiments, the monomeric diisocyanate content of the reaction mixture obtained from step i) is reduced in step ii), preferably by using distillation means, wherein step iii) is conducted after step ii).

In step iii) of the method for producing the reaction product **RP,** the at least one second polyol **PO2** is added to the reaction mixture obtained from step i) or ii) and the reaction is carried out to give the reaction product **RP.**

The reaction conducted in step iii) will convert substantially all the hydroxyl groups of the at least one second polyol **PO2,** for example at least 95 %, generally at least 99 %, of the hydroxyl groups of the at least one second polyol **P02.**

According to one or more embodiments, the at least one second polyol **PO2** is added to the reaction mixture obtained from step i) or ii) in an amount of 1 - 35 wt.-%, preferably 2.5 - 25 wt.-%, more preferably 3.5 - 15 wt.-%, based on the sum of the weights of the at least one first polyol **P01,** the at least one polyisocyanate **PI,** and the at least one second polyol **P02.**

The reaction of the at least one second polyol **PO2** with the reaction mixture in step iii) can be carried out in a conventional manner. This means particularly that the hydroxyl groups of the at least one second polyol **PO2** react with the isocyanate groups of the reaction mixture, especially with the isocyanate groups of the polyurethane pre-polymer and with the isocyanate groups of unconverted polyisocyanate **PI.**

The reaction of the at least one second polyol **PO2** with the reaction mixture in step iii) may, for example, be carried out at temperatures in the range of 60 - 160°C, preferably 80 - 140°C ,optionally in the presence of a catalyst. The reaction time, as will be appreciated, depends on the temperature employed, but may, for example, be in the range of from 30 minutes to 6 hours, preferably from 30 minutes to 3 hours, more preferably from 30 minutes to 1.5 hours.

The type of the at least one first polyol **P01** is not particularly restricted in the present invention. Suitable polyols to be used as the at least one first polyol **P01** include polyether polyols, polyester polyols, and polycarbonate polyols. Preferred polyols for use as the at least first polyol **P01** are, for example, diols and triols and mixtures thereof, particularly diols.

Suitable polyether polyols, also known as polyoxyalkylene polyols, are those which are polymerization products of ethylene oxide, 1,2-propylene oxide, 1,2-or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols are polyoxyalkylene diols or polyoxyalkylene triols, especially polyoxyethylene diols or polyoxyethylene triols. Especially suitable are polyoxyalkylene diols or polyoxyalkylene triols, more particularly polyoxypropylene diols and triols, having a number average molecular weight (Mₙ) in the range of 1000 - 30000 g/mol, and also polyoxypropylene diols and triols having a number average molecular weight (Mₙ) of 400 - 8000 g/mol. Suitable polyether polyols are commercially available, for example, under the trade name of Acclaim^{®} and Desmophene^{®} (from Covestro).

Suitable polyester polyols include liquid polyester polyols as well as amorphous, partially crystalline, and crystalline polyester polyols, which are solid at a temperature of 25 °C. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Suitable polycarbonate polyols are those that are obtainable by reacting, for example, the above mentioned dihydric or trihydric alcohols suitable for synthesizing the polyester polyols, with dialkyl carbonates, diaryl carbonates or phosgene. Polycarbonate diols are particularly suitable, especially amorphous polycarbonate diols.

Suitable for use as the at least one first polyol **P01** are so-called "EO-endcapped" (ethylene oxide-endcapped) polyoxypropylene diols or triols, particularly diols. The latter are special polyoxypropylene-polyoxyethylene polyols, which are obtained, for example, by alkoxylating pure polyoxypropylene polyols with ethylene oxide after the end of the polypropoxylation process, and which therefore have primary hydroxyl groups.

Preferably, the at least one first polyol **P01** is selected from the group consisting of amorphous, partially crystalline, and crystalline polyester polyols, which are solid at a temperature of 25 °C. According to one or more embodiments, the at least one first polyol **P01** is selected from the group consisting of partially crystalline and crystalline polyester polyols, which are solid at a temperature of 25 °C.

Particularly suitable partially crystalline and crystalline polyester polyols have
- a hydroxyl number measured according to DIN 53 240-2 standard of 10 - 100 mg KOH/g, preferably 15 - 50 mg KOH/g and/or
- a softening point measured by Ring and Ball method according to DIN ISO 4625 standard of 50 - 100 °C, preferably 55 - 85 °C and/or
- a number average molecular weight (Mₙ) of 500 - 10000 g/mol, preferably 1000 - 5000 g/mol.

Suitable at 25 °C solid partially crystalline and crystalline polyester polyols, are commercially available, for example, under the trade name Dynacoll^{®} 7300-series (from Evonik Industries).

Suitable polyisocyanates to be used as the at least one polyisocyanate **PI** include, for example, aliphatic, cyclo-aliphatic, and aromatic polyisocyanates, especially monomeric di- and tri-functional isocyanates, particularly monomeric diisocyanates. Non-monomeric diisocyanates, such as oligomers, polymers, and derivatives of monomeric diisocyanates, for example adducts of monomeric diisocyanates, are also suitable.

According to one or more embodiments, the at least one polyisocyanate **PI** is a diisocyanate, preferably a monomeric diisocyanate, more preferably a monomeric diisocyanate having a number average molecular weight (Mₙ) of not more than 1000 g/mol, preferably not more than 500 g/mol, more preferably not more than 400 g/mol.

Examples of suitable monomeric diisocyanates include aliphatic and aromatic monomeric diisocyanates, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4-and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3-and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI).

Suitable aliphatic and aromatic monomeric diisocyanates are commercially available, for example, under the trade names of Lupranat^{®} (from BASF), Desmodur (from Covestro), and Duranate^{®} (from Asahi Kasei).

According to one or more embodiments, the at least one polyisocyanate **PI** is a monomeric diisocyanate selected from the group consisting of 4,4'-diphenylmethane diisocyanate, optionally with proportions of 2,4'- and/or 2,2'-diphenylmethane diisocyanate (MDI), 2,4-tolylene diisocyanate or mixtures with 2,6-tolylene diisocyanate (TDI), 1,6-hexamethylene diisocyanate (HDI), and 1-isocyanato-3,3,5-trimethyl-5-isocyanatomethylcyclohexane (IPDI), preferably from the group consisting of MDI and IPDI. Furthermore, a person skilled in the art knows that the technical grade products of diisocyanates may frequently contain isomer mixtures or other isomers as impurities.

According to one or more embodiments, the adhesive composition further comprises at least one at 25 °C liquid polyolefin resin **PR.** The at least one at 25 °C liquid polyolefin resin **PR** is different from the at least one non-functionalized poly-α-olefin **P,** the at least one first polyol, and the at least one second polyol. Preferably, the at least one at 25 °C liquid polyolefin resin **PR** is a at 25 °C liquid non-functionalized polyolefin resin.

According to one or more embodiments, the at least one at 25 °C liquid polyolefin resin **PR** is present in the adhesive composition in an amount of 1 - 30 wt.-%, preferably 5 - 25 wt.-%, more preferably 5 - 20 wt.-%, even more preferably 5 - 17.5 wt.-%, based on the total weight of the adhesive composition.

According to one or more embodiments, the at least one at 25 °C liquid polyolefin resin **PR** has a number average molecular weight (Mₙ) in the range of 500 - 5'000 g/mol, preferably 500 - 3'500 g/mol, more preferably 1'000 - 3'000 g/mol, more preferably 1'500 - 2'500 g/mol and/or a pour point determined according to ISO 3016 standard in the range of -10 to +15 °C, preferably from -10 to +10 °C.

According to one or more embodiments, the at least one at 25 °C liquid polyolefin resin **PR** is selected from a group consisting of polyisobutylene (PIB) and polybutene, particularly low molecular weight polyisobutylene and low molecular weight polybutene, preferably having a number average molecular weight (Mₙ) in the range of 500 - 5'000 g/mol, more preferably 500 - 3'500 g/mol, even more preferably 1'000 - 3'000 g/mol, still more preferably 1'500 - 2'500 g/mol and/or a pour point determined according to ISO 3016 standard in the range of -10 to +15 °C, preferably from -10 to +10 °C. The term "polyisobutylene" refers in the present document to polyolefins and olefin oligomers of isobutylene or 2-methyl-1-propene, preferably containing at least 75 %, more preferably at least 85 % of repeat units derived from isobutylene. The term "polybutene" refers in the present document to polyolefins and olefin oligomers comprising isobutylene and/or 1-butene and/or 2-butene. The ratio of the C₄-olefin isomers can vary by manufacturer and by grade. When the C₄-olefin is exclusively 1-butene, the material is referred to as "poly-n-butene" or "PNB".

Suitable commercially available at 25 °C liquid polybutenes and polyisobutylenes include, for example, Indopol^{®} H-300 and Indopol^{®} H-1200 (from Ineos); Glissopal^{®} V230, Glissopal^{®} V500, and Glissopal^{®} V700 (from BASF); Dynapak^{®} poly 230 (from Univar GmbH, Germany); and Daelim^{®} PB 950 (from Daelim Industrial).

According to one or more embodiments, the at least one at 25 °C liquid polyolefin resin **PR** is a at 25 °C liquid polyisobutylene, preferably having a number average molecular weight (Mₙ) of not more than 5'000 g/mol, more preferably not more than 3'000 g/mol, even more preferably not more than 2'500 g/mol and/or a pour point determined according to ISO 3016 standard in the range of -10 to +15 °C, preferably -10 to +10 °C and/or a polydispersity index (M_{w}/Mₙ) determined by GPC, of not more than 5, preferably in the range of 0.5 - 5.0, more preferably 1.0 - 4.5, even more preferably 1.0 - 3.5, still more preferably 1.25 - 2.5.

According to one or more embodiments, the adhesive composition further comprises at least one polyolefin wax **PW.** According to one or more embodiments, the at least one polyolefin wax **PW** is present in the adhesive composition in an amount of 5 - 40 wt.-%, preferably 10 - 35 wt.-%, more preferably 15 - 35 wt.-%, based on the total weight of the adhesive composition.

Suitable polyolefin waxes **PW** include, particularly, the ones obtained by metallocene-catalyzed polymerization. According to one or more embodiments, the at least one polyolefin wax **PW** has an average molecular weight of 5'000 - 35'000 g/mol, preferably 5'000 - 30'000 g/mol and/or a softening point measured by Ring and Ball method according to DIN EN 1238 of not more than 140 °C, preferably not more than 120 °C more preferably not more than 100 °C and a melt viscosity measured according to DIN 53019 standard at 170 °C in the range of 10 - 10'000 MPa·s, preferably 750 - 7'500 MPa·s and/or a heat of fusion (Hf) as determined by DSC measurements of at least 40 J/g, preferably at least 45 J/g, more preferably at least 50 J/g, even more preferably at least 55 J/g.

According to one or more embodiments, the at least one polyolefin wax **PW** is a non-functionalized polyolefin wax, preferably a non-functionalized copolymer wax, more preferably a non-functionalized propylene-ethylene copolymer wax.

Suitable non-functionalized propylene-ethylene copolymer waxes are commercially available, for example, under the trade name of Licocene^{®} (from Clariant), such as Licocene^{®} PP 1302, Licocene^{®} PP 1502, Licocene^{®} PP 1602, Licocene^{®} PP 2602, and Licocene^{®} PP 3602 TP.

The adhesive composition may further comprise one or more catalysts, which are used to accelerate the reaction of the isocyanate groups with moisture. The presence of such catalysts is not mandatory, but it may be preferred. Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of two or more catalysts may also be used, preferred ones including combinations of one or more metal-catalysts with one or more morpholine amine compounds.

The total amount of catalysts catalyzing the reactions of isocyanate groups with moisture, if present in the adhesive composition, is preferably 0.005 - 2.00 wt.-%, more preferably 0.05 - 1.00 wt.-%, based on the total weigh of the adhesive composition.

The adhesive composition can further comprise auxiliary substances and additives, for example, those selected from the group consisting of fillers, plasticizers, adhesion promoters, UV absorption agents, UV and heat stabilizers, optical brighteners, pigments, dyes, and desiccants. Examples of suitable UV stabilizers that can be added to the adhesive composition include, for example, sterically hindered phenols. The total amount of such auxiliary substances and additives is preferably not more than 15 wt.-%, more preferably not more than 10 wt.-%, even more preferably not more than 5 wt.-%, based on the total weight of the adhesive composition.

The adhesive composition is a moisture-curing adhesive composition, i.e. the adhesive composition can be cured by contacting the composition with water, especially with atmospheric moisture. Preferably, the adhesive composition is a moisture curing hot-melt adhesive composition.

Furthermore, the adhesive composition of the present invention has good workability under typical application conditions of hot-melt adhesives, particularly at temperatures in the range of 100 - 180°C, meaning that at the application temperature the adhesive has sufficiently low viscosity to enable application to a substrate in a molten state. The adhesive composition also develops a high initial strength immediately after the application to a substrate upon cooling even before the initiation of the crosslinking reaction with water, particularly with atmospheric moisture.

According to one or more embodiments, the adhesive composition has a viscosity at a temperature of 170°C of not more than 100000 mPa·s, preferably not more than 75000 mPa·s, more preferably not more than 50000 mPa·s. The viscosity at temperature of 170 °C can be measured using conventional viscometers at 5 revolutions per minute, for example by using a Brookfield DV-2 Thermosel viscometer with a spindle No. 27.

According to one or more embodiments, the adhesive composition has a softening point measured by Ring and Ball method according to DIN EN 1238 standard in the range of 60 - 150 °C, preferably 65 - 140 °C, more preferably 70 - 130 °C, even more preferably 75 - 115 °C.

Furthermore, the adhesive composition can be provided as a one-component storage-stable composition. According to one or more embodiments, the adhesive composition is a one-component moisture curing hot-melt adhesive composition. The term "storage-stable composition" refers in the present document to a composition which, particularly in the absence of moisture, can be kept in a suitable package(s) or facility, such as a drum, a pouch or a cartridge, for example, for a period of several months up to one year or more, without suffering any service-relevant change in the application properties and/or reactivity of the composition.

The preferences given above for the at least one non-functionalized poly-α-olefin **P**, the reaction product **RP,** the at least one first polyol **P01,** the at least one second polyol **PO2,** the at least one polyisocyanate **PI,** the first polyurethane pre-polymer **PUP1,** the second polyurethane pre-polymer **PUP2,** the at least one polyolefin resin PR, and to the at least one polyolefin wax **PW** apply equally to all subjects of the present invention unless stated otherwise.

Another subject of the present invention is a method for producing an adhesive composition of the present invention comprising mixing of the at least one non-functionalized poly-α-olefin **P** and the reaction product **RP** with each other.

The mixing of the at least one non-functionalized poly-α-olefin **P** and the reaction product **RP** with each other is preferably conducted at a temperature, which is above the softening point of both of these constituents. According to one or more embodiments, the mixing of the at least one non-functionalized poly-α-olefin **P** and the reaction product **RP** is conducted at a temperature in the range of 50 - 200 °C, preferably 65 - 180 °C, more preferably 80 - 175 °C, even more preferably 90 - 160 °C.

According to one or more embodiments, the method for producing the adhesive composition comprises steps of:
A) Mixing the first polyurethane pre-polymer **PUP1** with the at least one second polyol **PO2** to obtain a starting mixture,
B) Reacting the starting mixture to obtain a reaction mixture comprising the reaction product **RP,**
C) Mixing the reaction mixture with the at least one non-functionalized poly-α-olefin **P.**

According to one or more further embodiments, the method for producing the adhesive composition comprises steps of:
A') Mixing the at least one first polyol **P01** with the at least one polyisocyanate **PI** to obtain a first starting mixture,
B') Reacting the first starting mixture to obtain a first reaction mixture comprising a polyurethane pre-polymer and unconverted polyisocyanate **PI,**
C') Optionally reducing the monomeric diisocyanate content of the first reaction mixture obtained from step II), preferably by distillation,
D') Adding to the first reaction mixture obtained from step B') or C') the at least one second polyol **PO2,**
E') Carrying out the reaction between the polyurethane pre-polymer, unconverted polyisocyanate **PI,** and the at least one second polyol **PO2** to obtain a second reaction mixture containing the reaction product **RP,**
F') Mixing the second reaction mixture with the at least one non-functionalized poly-α-olefin **P.**

The temperature at which the steps A) to C) or A') to F') of the method are conducted depends on the embodiment of the adhesive composition. According to one or more embodiments, the steps A) to C) or A') to F') are conducted at a temperature in the range of 50 - 200 °C, preferably 65 - 180 °C, more preferably 80 - 160 °C, even more preferably 90 - 150 °C.

Another subject of the present invention is use of the adhesive composition of the present invention as an assembly adhesive, a laminating adhesive, or as an adhesive for the building of sandwich elements.

Still another subject of the present invention is a method for adhesively bonding a first substrate to a second substrate, the method comprising steps of:
I) Heating an adhesive composition according to the present invention to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, particularly with atmospheric moisture.

The first and second substrates are preferably sheet-like articles having first and second major surfaces defined by peripheral edges and defining a thickness there between or three-dimensional shaped articles.

In the method for adhesively bonding a first substrate to a second substrate, the adhesive composition is heated to a temperature above the softening point of the adhesive composition and applied on the surface of the first substrate in molten state using any conventional technique, for example, by using slot die coating, roller coating, extrusion coating, calendar coating, or spray coating. The adhesive composition can be applied to the surface of the first substrate with a coating weight of, for example, 50 - 500 g/m², such as 55 - 350 g/m², particularly 65 - 150 g/m².

Especially in case the adhesive composition is applied to the surface of the first substrate as a thin film having a coating weight of, for example, less than 150 g/m², particularly less than 100 g/m², the adhesive film formed in step II) may be reactivated by heating before being contacted with the surface of the second substrate. The reactivation temperature depends on the embodiment of the adhesive composition. It may be preferable, for example, that the adhesive film is reactivated by heating to a temperature of 60 - 200 °C, particularly 70 - 180 °C, preferably 120 - 160 °C. The heating of the adhesive film can be conducted using any conventional techniques, such as heating in an oven, heating by air stream, or heating with infrared (IR)-radiation. The reactivated adhesive film is preferably contacted with the second substrate within short time after the reactivation temperature is reached, in any case within the open time of the adhesive composition.

After the adhesive film has been contacted with the surface of the second substrate, the adhesive composition develops a certain initial adhesive strength by physical curing, i.e. upon cooling. Depending on the application temperature and on the embodiment of the adhesive composition, particularly on the reactivity of the adhesive, the chemical curing reactions may begin already during the application of the adhesive composition on the surface of the first substrate. Typically, however, major part of the chemical curing occurs after the application of adhesive, particularly, after the applied adhesive film has been contacted with the surface of the second substrate.

The first and second substrates can be composed of any conventional material including polymeric material, metal, painted metal, glass, wood, wood derived materials such as natural fiber polypropylene (NFPP), and fiber materials. Suitable polymeric materials include, for example, polyethylene (PE), particularly high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, one of the first and second substrates is composed of a polar material, wherein the other substrate is composed of a non-polar material.

According to one or more further embodiments, the first substrate, or in case the first substrate is composed of multiple layers, the layer constituting the outer exterior surface on which the adhesive composition is applied in step II) of the method, is composed of a polar material, preferably selected from the group consisting of PMMA, PA, PC, ABS, glass fiber reinforced plastic (GFRP), glass, and metal and the second substrate, or in case the second substrate is composed of multiple layers, the layer constituting the outer exterior surface, which is contacted with the adhesive film in step III) of the method, is composed of a non-polar material, preferably selected from the group consisting of polypropylene, polyethylene, and polystyrene.

According to one or more further embodiments, the first substrate, or in case the first substrate is composed of multiple layers, the layer constituting the outer exterior surface on which the adhesive composition is applied in step II) of the method, is composed of a non-polar material, preferably selected from the group consisting of polypropylene, polyethylene, or polystyrene and the second substrate, or in case the second substrate is composed of multiple layers, the layer constituting the outer exterior surface which is contacted with the adhesive film in step III) of the method, is composed of a polar material, preferably selected from the group consisting of PMMA, PA, PC, ABS, glass fiber reinforced plastic (GFRP), glass, or metal

Still another subject of the present invention is a composite element obtainable by using the method for adhesively bonding a first substrate to a second substrate of the present invention.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| | | |
|---|---|---|
| Polyol **PO1** | Partially crystalline polyester polyol, melting point 50 - 65 °C (DSC), hydroxyl Number (mg KOH/g) 25-35 | Evonik Industries AG |
| Polyol **PO21** | Cardolite@ NX 9203 | Cardolite |
| Polyol **PO22** | Cardolite@ GX 9201 | Cardolite |
| Polyol **PO23** | Cardolite@ NX 9201 | Cardolite |
| Polyol **PO24** | Cardolite@ NX 9212 | Cardolite |
| Polyisocyanate **PI** | 4,4'-diphenylmethane diisocyanate (MDI), NCO content 30 - 40 g/100 g (ASTM D 5155-96 A) | BASF Polyurethanes GmbH |
| Polymer **P** | Propene rich amorphous poly-α-olefin, softening point 90 - 105 °C (DIN EN 1427) | Evonik Industries AG |

The adhesive compositions presented in Table 2 were prepared according to the procedures as presented below.

### Pre-polymer PUP1

200 g of the polyol **P01** and 27.5 g of the polyisocyanate **PI** were reacted at a temperature of 80 °C using a typical preparation method to obtain a reaction mixture containing a polyurethane pre-polymer and unreacted polyisocyanate **PI.** The reaction mixture had an isocyanate content of 7.8 wt.-%, a viscosity of 7.9 Pa·s at 60 °C and a content of residual polyisocyanate **PI** of ca. 16 wt.-% of. The reaction mixture was then subjected to distillation to reduce the content of volatile compounds, particularly the content of unreacted polyisocyanate **PI.** The distillation process was conducted using a short path evaporator (jacket temperature 180 °C, pressure 0.005 mbar, condensation temperature 47 °C). The thus obtained at normal room temperature solid polyurethane pre-polymer **PUP1** had an isocyanate content of ca. 2 wt.-%, a viscosity of 7.1 Pa·s at 100 °C, and a content of residual polyisocyanate **PI** of 0.2 wt.-%.

The viscosity was determined using a rotational viscometer Rheotec RC30 (cone diameter 25 mm, cone angle 1°, cone tip-plate distance 0.05 m, shear rate 50 s⁻¹)

The content of unreacted polyisocyanate **PI** (monomeric diisocyanate) was determined using a high pressure liquid chromatography (HPLC) (with photodiode array, 0.04 M sodium acetate/acetonitrile as mobile phase, and using N-Propyl-4-nitrobenzylamine as derivatization agent)

### Reaction product RP

The polyurethane pre-polymer **PUP1** was mixed with dewatered polyol **PO2** and reacted with stirring (∼80 rpm) for 60 minutes under vacuum (- 0.9 bar) at a temperature of 140 °C to obtain the reaction product **RP.**

### Adhesive composition

The poly-α-olefin **P** was mixed with the reaction product **RP** and stirred (∼80 rpm) at a temperature of 140 °C for 20 minutes. The obtained adhesive composition was filled in tubes and stored at room temperature in the absence of moisture.

### Lap shear measurement

Adhesion to polar and non-polar substrates was examined by measuring lap shear strengths with composite elements composed of a first polycarbonate (PC) substrate and a second substrate (PC, polyamide (PA), or aluminum (AL)) bonded to each other with the tested adhesive composition. The first and second substrates had dimensions of 100 mm x 25 mm x 2 mm. Both substrates were cleaned with 2-propanol, dried for at least 10 minutes, and stored at temperature of 60 °C before being used for the preparation of the composite elements.

The tested adhesive composition provided in a sealed tube was preheated in an oven at a temperature of 140 °C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 200 µm and dimensions of 60 cm x 6 cm. Immediately after the application of the adhesive, the silicone paper strip was removed from the heating plate and the adhesive film was transferred by reactivation onto the surface of the first substrate. The silicone paper was then removed and the first substrate with the adhesive film on its surface and the second substrate were stored 30 seconds at a temperature of 140 °C in an oven.

The first and second substrates were removed from the oven, contacted with each other, and pressed together by rolling over ten times back and forth using a roller with a weight of 5 kg. The adhesive bonding area had dimensions of 2.5 cm x 2.5 cm. The prepared composite elements were stored for 2 or 24 hours with a 3 kg load at standard climatic conditions (23 °C, relative humidity of 55 %) before measuring of the peel strengths.

The lap shear strengths were measured using a Zwick/Roell Z010 material testing apparatus using a testing speed of 100 mm/min. The values for lap shear strength presented in Table 2 have been obtained as average of two measurements conducted with composite elements prepared using the same adhesive composition.

**Table 2**

| **Composition [wt.-%]** | **Ref-1** | **Ex-1** | **Ex-2** | **Ex-3** | **Ex-4** | **Ex-5** |
|---|---|---|---|---|---|---|
| Poly-α-olefin **P** | | 5.53 | 4.91 | 6.1 | 6.32 | 8.86 |
| Pre-polymer **PUP1** | 100.00 | 88.95 | 90.18 | 87.8 | 87.36 | 82.28 |
| Polyol **PO21** | | 5.52 | 4.91 | | | |
| Polyol **PO22** | | | | 6.1 | | |
| Polyol **PO23** | | | | | 6.32 | |
| Polyol **PO24** | | | | | | 8.86 |
| Reaction product **RP** | | 94.47 | 95.09 | 93.90 | 93.68 | 91.14 |
| Total | 100.00 | 100.00 | 100.00 | 100.00 | 100.00 | 100.00 |

| Lap shear strength [MPa], 2 hours | | | | | | |
|---|---|---|---|---|---|---|
| Polycarbonate- Polycarbonate | 0.4 | 2.1 | 1.1 | 1.8 | 1.1 | 0.9 |
| Polycarbonate -Polyamide | 0.5 | 1.8 | 1.0 | 0.4 | 0.5 | 0.5 |
| Polycarbonate -Aluminum | 0.6 | 2.2 | 4.3 | 3.2 | 2.5 | 1.4 |

| Lap shear strength [MPa], 24 hours | | | | | | |
|---|---|---|---|---|---|---|
| Polycarbonate- Polycarbonate | 1.7 | 4.5 | 11.0 | 6.9 | 6.4 | 5.2 |
| Polycarbonate -Polyamide | 1.3 | 1.5 | 1.3 | 0.7 | 0.9 | 1.6 |
| Polycarbonate -Aluminum | 2.0 | 4.0 | 6.0 | 5.0 | 4.3 | 5.8 |

## Claims

1. An adhesive composition comprising:
a) 0.1 - 25 wt.-%, preferably 0.5 - 20 wt.-%, of at least one non-functionalized poly-α-olefin **P** and
b) At least 65 wt.-%, preferably at least 75 wt.-%, of a reaction product **RP,** all proportions being based on the total weight of the adhesive composition,
wherein the reaction product **RP** is obtained by reacting at least one first polyol **P01,** at least one second polyol **PO2,** and at least one polyisocyanate **PI** or
by reacting at least one second polyol **PO2** with a first polyurethane prepolymer **PUP1** at a molar ratio of isocyanate groups to hydroxyl groups of at least 3 or
by reacting at least one first polyol **P01** with a second polyurethane prepolymer **PUP2** at a molar ratio of isocyanate groups to hydroxyl groups of at least 3, wherein the second polyurethane pre-polymer **PUP2** has been obtained by reacting at least one second polyol **PO2** with at least one polyisocyanate **PI,**
wherein the at least one second polyol **PO2** is a cashew nutshell liquid based polyol.

2. The adhesive composition according to claim 1, wherein the at least one non-functionalized poly-α-olefin **P** is a at 25 °C solid non-functionalized amorphous poly-α-olefin, preferably having a number average molecular weight (Mₙ) in the range of 1500 - 50000 g/mol and/or a softening point measured by Ring and Ball method according to DIN EN 1238 in the range of 60 - 180 °C.

3. The adhesive composition according to any one of previous claims, wherein the reaction product **RP** comprises 65 - 97.5 wt.-%, preferably 70 - 95 wt.-%, of the total weight of the adhesive composition.

4. The adhesive composition according to any one of previous claims, wherein the at least one second polyol **PO2** has a viscosity at 25 °C determined according to ASTM D2196 standard in the range of 500 - 10000 MPa·s, preferably 1000 - 5000 MPa·s and/or hydroxyl value determined according of ASTM D1957 standard of in the range of 25 - 200 mg KOH/g, preferably 50 - 150 mg KOH/g.

5. The adhesive composition according to any one of previous claims, wherein the at least one second polyol **PO2** is a cashew nutshell liquid based diol, preferably a cashew nutshell liquid based polyester diol or a cashew nutshell liquid based polyether diol.

6. The adhesive composition according to any one of previous claims, wherein the first polyurethane pre-polymer **PUP1** and/or the second polyurethane pre-polymer **PUP2** has an average isocyanate-functionality determined according to ISO 14896-2009 standard method A in the range of 1.2 - 2.7, preferably 1.5 - 2.5 and/or an isocyanate content determined by using the method as defined in ISO 11909 standard in the range of 0.5 - 25 wt.-%, preferably 2.5 - 20 wt.-%.

7. The adhesive composition according to any one of claims having a content of monomeric diisocyanates of not more than 0.75 wt.-%, preferably not more than 0.5 wt.-%, based on the total weight of the adhesive composition.

8. The adhesive composition according to any one of previous claims, wherein the first polyurethane pre-polymer **PUP1** and/or the second polyurethane pre-polymer **PUP2** is a low monomer polyurethane prepolymer having a content of monomeric diisocyanates of not more than 1.0 wt.-%, preferably not more than 0.75 wt, based on the weight of the polyurethane pre-polymer.

9. The adhesive composition according to any one of previous claims, wherein the reaction product **RP** is obtained by reacting the at least one second polyol **PO2** with the first polyurethane pre-polymer **PUP1** at a molar ratio of isocyanate groups to hydroxyl groups of at least 3, preferably in the range of from 3 to 10, more preferably from 3.5 to 7.5.

10. The adhesive composition according to any one of previous claims, wherein the reaction product **RP** is obtained by using a method comprising steps of:
i) reacting the at least one first polyol **P01** with the at least one polyisocyanate **PI** to obtain a reaction mixture comprising a polyurethane pre-polymer and unconverted polyisocyanate **PI,**
ii) optionally reducing the monomeric diisocyanate content of the reaction mixture obtained from step i), preferably by distillation,
iii) adding to the reaction mixture obtained from step i) or ii) the at least one second polyol **PO2** and carrying out the reaction.

11. The adhesive composition according to claim 10, wherein the molar ratio of isocyanate groups to hydroxyl groups in step i) is in the range from 1.5 to 2.5, preferably from 1.7 to 2.2 and/or wherein the molar ratio of isocyanate groups to hydroxyl groups in step iii) is in the range from 3 to 10, preferably from 3.5 to 7.5.

12. A method for producing an adhesive composition according to any one of previous claims comprising mixing the at least one non-functionalized poly α-olefin **P** and the reaction product **RP** with each other.

13. Use of the adhesive composition according to any one of claims 1-11 as an assembly adhesive, laminating adhesive, or as an adhesive for the building of sandwich elements.

14. A method for adhesively bonding a first substrate to a second substrate, the method comprising steps of:
I) Heating an adhesive composition according to any one of claims 1-11 to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, particularly with atmospheric moisture.

15. The method according to claim 14, wherein one of the first and the second substrates is composed of a polar material, wherein the other substrate is composed of a non-polar material.
